(19) Europäisches Patentamt

European Patent Office

Office européen des brevets

(11) **EP 2 101 156 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(51) Int Cl.:
**G01D 3/08** *(2006.01)*       **B60G 17/0185** *(2006.01)*

(21) Anmeldenummer: **09151491.9**

(22) Anmeldetag: **28.01.2009**

(54) **Verfahren und Vorrichtung zum Überwachen von Fahrwerkregelsystemen**

Method and device for monitoring undercarriage regulation systems

Procédé et dispositif destinés à la surveillance de systèmes de réglage de châssis

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.02.2008 DE 102008010113**

(43) Veröffentlichungstag der Anmeldung:
**16.09.2009 Patentblatt 2009/38**

(73) Patentinhaber: **Continental Teves AG & Co. OHG 60488 Frankfurt (DE)**

(72) Erfinder:
• **Schmitt, Wolfgang**
  **30823 Garbsen (DE)**
• **Tepe, Ralph**
  **30167 Hannover (DE)**
• **Behrends, Holger**
  **30179 Hannover (DE)**

(56) Entgegenhaltungen:
DE-A1- 4 126 731       US-A- 5 774 379
US-A1- 2002 188 423       US-A1- 2007 068 266

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 101 156 B1

**Beschreibung**

Die Erfindung betrifft ein Verfahren und eine Vorrichtung zum Überwachen von Fahrwerkregelsystemen, beispielsweise von Straßenfahrzeugen, zur Erkennung von Defekten von an Fahrzeugrädern oder Radträgern angeordneten Sensoren oder solchen Sensoren zugehörigen Bauteilen sowie deren Anbringung.

Fahrwerkregelsysteme benötigen zur Erfassung von Ist-Zuständen und einer daraus folgenden Einstellung eines Fahrwerks oder einzelner Fahrwerkskomponenten in der Regel ein Sensorsystem, bei dem wenigstens ein Sensor mit einem Radträger verbunden ist. Für eine Dämpfungsregelung wird beispielsweise eine Radbeschleunigung mit einem Beschleunigungssensor gemessen. Niveauregelsysteme, wie sie in Kraftfahrzeugen eingesetzt werden, benötigen hingegen einen Sensor, der die Höhe des Fahrzeugaufbaus über der Fahrbahn bzw. relativ zum Radträger misst. Für Niveauregelsysteme sind bereits Sensorsysteme etabliert, die Vertikalbewegungen der Räder in Bezug auf den Aufbau messen. Diese haben üblicherweise Anschlagpunkte am Fahrzeugaufbau und an den Radträgern oder an mit diesen im Fahrbetrieb bewegten Komponenten.

Bekannte Verfahren zur Fahrwerksregelung und Fahrwerksüberwachung nutzen die bei der Fahrt erzeugten und von den Sensoren registrierten Radanregungen. Die Radanregung wird am Sensorausgang in Form eines schwankenden Signals sichtbar, welches einem beispielsweise im Stillstand angezeigten statischen Wert überlagert ist. Voraussetzung für eine effektive Fahrwerksregelung und ein einwandfreies Fahrverhalten eines Fahrzeugs sind einerseits intakte Fahrwerkskomponenten, andererseits ist dafür die einwandfreie Funktion der zugehörigen Sensoren erforderlich. Daher ist eine Defekterkennung und Defektüberwachung sowohl der Fahrwerkskomponenten, d.h. der Feder-/Dämpfer-Systeme, der Räder und Radträger sowie der Verbindungteile zum Fahrzeugaufbau als auch der Fahrwerkssensoren, insbesondere der vorhandenen Abstands-, Geschwindigkeits- und Beschleunigungssensoren, wichtig.

Die DE 100 20 521 B4 offenbart ein Verfahren aus der Schienenfahrzeugtechnik zur Überwachung des Schwingungsverhaltens von Laufdrehgestellen an Wagen von Zügen. An einem derartigen Laufdrehgestell ist eine Anzahl von Beschleunigungssensoren zur Aufnahme von Schwingungen, vorzugsweise in allen drei Raumrichtungen, wie sie im Fahrbetrieb angeregt werden, angeordnet. Die von den Beschleunigungsaufnehmern gelieferten Ausgangssignale werden in einer Signalerfassungs- und Auswerteeinheit einer Frequenzanalyse, beispielsweise einer Fast-Fourier-Transformation, unterzogen und mit Referenzwerten verglichen. Dazu sind in einem Speicher für die zu betrachtenden Fahrzeugkomponenten messtechnisch ermittelte Eigenschwingungskennwerte abgelegt.

Da eine Geschwindigkeits- und/oder Fahrwegabhängigkeit der Schwingungsanregung des Schienenfahrzeuges angenommen wird, sind, entsprechend vorgegebener Geschwindigkeitsstufen und/oder Fahrwegskriterien, eine Anzahl unterschiedlicher Eigenschwingungskennwerte abgespeichert. Anhand eines Vergleichs einer jeweils zu erwartenden Eigenschwingung mit den gemessenen Ist-Signalen kann das Schwingungsverhalten der Laufdrehgestelle überwacht werden. Bei Abweichungen im Signalbereich der Eigenschwingung hinsichtlich Frequenz, Amplitude oder Dämpfungsverhalten, die vorgegebene Grenzwerte überschreiten bzw. unterschreiten, wird auf ein abweichendes, möglicherweise fehlerhaftes Schwingungsverhalten des gesamten Schienenfahrzeuges geschlossen und gegebenenfalls werden geeignete Maßnahmen eingeleitet.

Diese Druckschrift bezieht sich ausschließlich auf Schienenfahrzeuge. Hinweise, die ohne Weiteres auf eine Überprüfung von Sensorsystemen von in Straßenfahrzeugen eingesetzten Radsensoren und insbesondere von Niveauregelsystemen übertragbar sind, finden sich darin nicht.

Aus der DE 199 28 865 C1 ist ein Verfahren für Kraftfahrzeuge bekannt, mit dem Einbauungenauigkeiten eines Niveauregelsystems mit einer auf Drehwinkelsensoren basierender Höhenmessung zwischen einem Fahrzeugaufbau und einem festen Bezugspunkt an einem Fahrzeugrad bestimmt und kompensiert werden können. Die EP 1 281 950 A2 zeigt eine Reifen- und Radaufhängungsüberwachungsvorrichtung, bei der anhand einer Analyse von Oberschwingungen von Beschleunigungssensorsignalen und durch Vergleiche mit Referenzwerten Reifenunwuchten, Profilabnutzungen und Stoßdämpferschäden erkannt werden können. Aus der JP 04 135 913 A ist ein Radaufhängungssystem mit einer Vielzahl von Druck- und Beschleunigungssensoren bekannt, bei dem ein Ausfall eines Dämpfers anhand eines Frequenzvergleichs detektierbar ist.

Diese Verfahren setzen voraus, dass die Sensoren selbst sowie ihre zugehörigen Signalübertragungskomponenten und deren Befestigungen mechanisch intakt sind. Der Fachmann findet in allen zuvor genannten Druckschriften keine Hinweise auf eine Erkennung fehlerhafter Sensoren. Zwar können sensorinterne Defekte, wie beispielsweise der Abriss eines Bonddrahtes zwischen einem mikromechanischen Sensorelement und seiner Signalkonditionierung, mit Hilfe bekannter elektronischer Verfahren erkannt werden. Durch eine Überwachung derartiger elektrischer Fehler ist die Erkennung mechanischer Defekte jedoch nicht möglich.

Eine naheliegende Möglichkeit zur Überwachung der mechanischen Funktionsfähigkeit von Radsensoren besteht darin, die Änderungen des Sensorsignals bei der Auslenkung der Radsensoren infolge der unvermeidbar vorhandenen Fahrbahnunebenheiten zu beobachten. Ist das Sensorausgangssignal eines Radsensors trotz Fahrt konstant, so wird auf einen Defekt des Sensors geschlossen. Um ein ungewolltes Ansprechen einer derartigen Sensordefekterkennung bei sehr ebenen Fahrbahnen zu verhindern, kann die Erkennungsfunktion in solchen Fällen ausgeschaltet oder wenigstens desensibilisiert werden. Hierzu können für Plausibilitätsprüfungen zusätzlich die Signale an weiterer Rädern des Fahrzeugs befestigter Sensoren herangezogen werden.

Bei konkreten Fahrzeugmessungen wurde jedoch beobachtet, dass es durch die Bewegungen des Fahrzeugaufbaus bei der Fahrt und durch die mechanische Trägheit der Sensoren vorkommen kann, dass ein Sensor auch dann noch Änderungen seines Ausgangssignals zeigt, wenn er mechanisch geschädigt und der Kraftfluss durch den Sensor unterbrochen ist. In solchen Fällen wird ein Sensordefekt mit den bekannten Fehlererkennungsverfahren unter Umständen nicht erkannt, worauf ein falscher Ist-Zustand ermittelt wird, welches wiederum zu fehlerhaften und unerwünschten Fahrwerksregulierungen oder zum Systemausfall führen kann.

In der US 2007/068266 A1 sind ein Sensor und ein Sensormodul mit geringem Energieverbrauch und hoher Zuverlässigkeit offenbart. Es wird eine Signalverarbeitungsschaltung eines Sensormoduls zur Überwachung von Reifendruck und Temperatur beschrieben. Aus Sicherheitsgründen ist eine Selbstdiagnose wichtig um die einwandfreie Funktion des Sensors zu gewährleisten. Ein Mikrocomputer führt dabei Frequenzbereichstransformation von Sensorsignalen durch, die mittel Analyse von Frequenzspektren Rückschlüsse auf Sensordefekte zulassen.

Der Erfindung liegt die Aufgabe zugrunde, ein Verfahren und eine Vorrichtung zum Überwachen von Fahrwerkregelsystemen anzugeben, die eine sichere Erkennung von Sensordefekten, insbesondere von mechanischen Defekten, an Sensoren, die die Bewegung eines Rades oder eines Radträgers messen, ermöglichen.

Der Erfindung liegt die Erkenntnis zugrunde, dass eine Messung eines an einem Rad oder Radträger befestigten Sensors, der im Fahrbetrieb vertikale Radbzw. Radträgerbewegungen oder Abstandsänderungen relativ zu einem Fahrzeugaufbau misst, ein charakteristisches Eigenschwingverhalten des betrachteten Systems enthält, solange der Sensor bestimmungsgemäß an die Bewegung des Rades gekoppelt ist. Bei einer Störung des Kraftflusses durch den Sensor verändern sich diese Eigenschwingungsfrequenzen im Sensorsignal eindeutig oder verschwinden vollständig, woraus bei einer Auswertung des Sensorsignals auf einen mechanischen Sensordefekt geschlossen werden kann.

Die Erfindung geht daher aus von einem Verfahren zum Überwachen von Fahrwerkregelsystemen, beispielsweise von Straßenfahrzeugen, zur Erkennung von Defekten von an Fahrzeugrädern oder Radträgern angeordneten Sensoren oder solchen Sensoren zugehörigen Bauteilen sowie deren Anbringung. Zudem ist vorgesehen, dass wenigstens folgende Verfahrensschritte durchgeführt werden:

a) Einlesen und Speichern eines Sensorsignals wenigstens eines relevanten Sensors in einem vorgewählten Zeitfenster,
b) Durchführen einer Frequenzbereichstransformation des Sensorsignals,
c) Analysieren des Frequenzspektrums im Bereich wenigstens einer vorgegebenen Radeigenfrequenz,
d) Erkennen eines Sensordefektes, wenn das Frequenzspektrum in unzulässiger Weise von einer Vorgabe abweicht, und
e) Ausgeben einer Meldung bei Erkennen eines Sensordefektes und/oder Einleiten einer Systemreaktion auf einen erkannten Sensordefekt.

Die gestellte Aufgabe wird auch durch eine Vorrichtung zur Durchführung des Verfahrens gelöst.

Demnach geht die Erfindung weiterhin aus von einer Fahrwerkregelsystemüberwachungsvorrichtung beispielsweise von Straßenfahrzeugen, zur Erkennung von Defekten von an Fahrzeugrädern oder Radträgern angeordneten Sensoren oder solchen Sensoren zugehörigen Bauteilen sowie deren Anbringung. Zudem sind Mittel zum Einlesen und Speichern von Sensorsignalen in vorgewählten Zeitfenstern, zum Durchführen von Frequenzbereichstransformationen von Sensorsignalen, zur Analyse von transformierten Frequenzspektren im Bereich von Radeigenfrequenzen und zum Melden von Sensordefekten sowie zum Einleiten von Systemreaktionen auf erkannte Sensordefekte vorgesehen.

Durch die Erfindung können mechanische Defekte, insbesondere Materialbrüche und fehlerhafte Befestigungen, an Sensoren und an Komponenten von Sensoren, die der Vermittlung von Radbewegungen zu einem aktiv messenden Teil des Sensors, also zu einem Messkopf dienen, zuverlässig erkannt werden. Insbesondere funktioniert das erfindungsgemäße Verfahren auch in der eingangs geschilderten Situation, bei welcher der Sensor trotz Kraftflussunterbrechung Signaländerungen anzeigt, in der herkömmliche Defekterkennungsverfahren versagen, da es eine charakteristische Eigenschaft - die Eigenfrequenz - des Radsystems nutzt.

Wenn das Sensorausgangssignal die Radeigenfrequenz enthält, muss die mechanische Verbindung zum Rad folglich intakt sein. Dabei wird vorausgesetzt, dass der Sensor und der signalübertragende Messkanal über eine ausreichende Messbandbreite verfügt, welche die auszuwertende Radeigenfrequenz übersteigt. Durch eine vorzugsweise permanente Signalerfassung und Spektrumanalyse wird somit die Funktionsbereitschaft von Niveau- und Dämpfungsregelungen im Fahrbetrieb hinsichtlich der mechanischen Verbindung zwischen Rad, Radträger und Sensor überwacht, wodurch sich die Zuverlässigkeit derartiger Regelsysteme und die Fahrsicherheit eines damit ausgestatteten Fahrzeuges erhöht.

Demnach kann das bei der Rad- bzw. Radträgersensorik agierende System aus RadReifen-Radträger einerseits und Feder-Dämpfer andererseits als ein vertikal ausgerichteter, gedämpfter Feder-Masse-Schwinger betrachtet werden. Ein solches System zeigt bei einer Schwingungsanregung, wie sie das System im Fahrbetrieb normalerweise erfährt, ein Eigenschwingungsverhalten mit charakteristischen Eigenfrequenzen entsprechend der Bewegungsgleichung

$$\ddot{x} \; + \; (d/m) \; + \; \omega_0^2 \; \dot{x} = 0,$$

wobei $\omega_0 = \sqrt{(c/m)}$ die Eigenfrequenz, c die Federkonstante, m die Masse und d die Dämpfungskraft (viskose Reibung) ist.

Ein Sensor, der die Bewegung bzw. den Abstand des Rades relativ zum Fahrzeugaufbau messen soll, misst somit zwangsläufig diese Schwingungen des Rades mit. Da die Eigenfrequenz des Fahrzeugaufbaus, typischerweise etwa 1 Hz, deutlich geringer ist als die des Rades, typischerweise 10 Hz bis 25 Hz, erscheint der Fahrzeugaufbau dabei quasi als relativ zum Rad ruhend. Durch eine Transformation, vorzugsweise eine Fast-Fourier-Transformation (FFT), des Sensorausgangssignals innerhalb eines geeigneten Zeitfensters bzw. Zeitraumes in den Frequenzbereich ist somit eine ausgeprägte Spektrallinie im Messsignal bei der Radeigenfrequenz zu erwarten, solange der Sensor mit der Bewegung des Rades einhergeht. Wird eine Änderung im Ausgangssignal eines mechanisch defekten Sensors durch die Aufbaubewegung des Fahrzeugs verursacht, so kann das Sensorausgangssignal zwar die Eigenfrequenz des Fahrzeugaufbaus enthalten. Da diese jedoch in der Größenordnung um 1 Hz liegt, ist sie deutlich von den höheren Radeigenfrequenzen, über die der Sensordefekt identifizierbar ist, unterscheidbar. Zur Vereinfachung wird vorzugsweise nur die relevante Vertikalkomponente der Bewegung des Systems betrachtet.

Die Qualität und Genauigkeit der Frequenzbereichstransformation ist um so höher, je mehr Abtastwerte im betrachteten Zeitfenster analysiert werden und je größer dieses Zeitfenster ist. Die Analyse wird zweckmäßigerweise derart an die installierte Rechenleistung und Rechnerspeichergröße angepasst, dass einerseits eine möglichst genaue Analyse erfolgt, andererseits der Zeitaufwand begrenzt wird. Günstig dafür hat sich die Fast-Fourier-Transformation erwiesen, da sie gegenüber vergleichbaren Transformationsalgorithmen eine schnellere Berechnung des Spektrums erlaubt und dabei mit einer relativ geringen Menge an zu verarbeitenden Daten auskommt.

Die Analyse des Frequenzspektrums kann auf verschiedene Arten erfolgen:

Im einfachsten Fall wird das Frequenzspektrum in einem festgelegten Frequenzintervall auf das Vorhandensein einer oder mehrerer Spektrallinien, die durch eine Radbewegung generiert sind, geprüft. Alternativ dazu kann geprüft werden, ob sich einzelne Spektrallinien um ein festgelegtes Maß bzw. Betrag aus einem Rauschsignal abheben. Verschwindet also die Spektralkomponente, bei der die Radeigenfrequenz zu erwarten ist, aus dem Spektrum des Sensorausgangssignals oder sinkt sie auf einen Rauschpegel ab, so wird auf das Vorliegen eines mechanischen Defekts geschlossen. Dieser Defekt betrifft dann entweder den Sensor, seine Anbringung oder seine Teile, welche die Bewegung des Rades auf den Sensor übertragen. Ein solches die Bewegung übertragendes Teil ist beispielsweise ein bei gängigen Niveauregelsystemen mit Höhensensoren zwischen Radträger und Fahrzeugaufbau angeordnetes Koppelgestänge.

Außerdem können verschiedene Grenzwertbetrachtungen durchgeführt werden, bei denen bei einer Grenzwertunterschreitung einer mit der Radeigenfrequenz zusammenhängenden Amplitude ein mechanischer Sensordefekt detektiert wird.

Demnach kann die Amplitude einer eigenfrequenzrelevanten Spektrallinie des Frequenzspektrums bei einer vorgegebenen festen Frequenz mit einem Grenzwert verglichen werden. Diese Überprüfung ist besonders empfindlich gegenüber Verschiebungen der Radeigenfrequenz.

Es kann auch vorgesehen sein, dass in einem festgelegten Frequenzintervall des Frequenzspektrums, in dem wenigstens eine Radeigenfrequenz zu erwarten ist, die Spektrallinie mit der größten Amplitude ermittelt und mit einem Grenzwert verglichen wird. Diese Überprüfung lässt Frequenzverschiebungen zu, ist aber dennoch sehr empfindlich gegenüber Amplitudenschwankungen.

Weiterhin kann in einem festgelegten Frequenzintervall eine spektrale Leistungsdichte ermittelt und mit einem Grenzwert verglichen werden. Diese Ausführung ermöglicht eine besonders hohe Stabilität des Verfahrens bei Vorhandensein mehrerer Radeigenfrequenzen, wie sie in komplexen gedämpften Feder-Masse-Systemen vorkommen.

Außerdem kann vorgesehen sein, dass das transformierte Frequenzspektrum vor der Analyse logarithmiert wird. Insbesondere bei Leistungsdichtespektren können sich durch einfaches oder doppeltes Logarithmieren zumindest intervallweise näherungsweise lineare Kurven ergeben, wodurch sich die Auswertung, insbesondere der Grenzwertvergleich, vereinfacht.

Für die erläuterten Grenzwertbetrachtungen ist es sinnvoll, fahrzeuggeschwindigkeitsabhängige Grenzwerte, beispielsweise in Geschwindigkeitsstufen, vorzugeben. Da die Fahrwerksanregung von der Fahrgeschwindigkeit abhängt, weisen die zu erwartenden Amplituden im Frequenzspektrum ebenfalls eine Geschwindigkeitsabhängigkeit auf. Insbesondere sind bei geringen Geschwindigkeiten kleine Amplituden zu erwarten. Da die Sensibilität des Verfahrens bei sehr niedrigen Geschwindigkeiten (ebenso wie bei sehr ebenem Untergrund) somit abnimmt, ist es vorteilhaft eine untere Geschwindigkeitsschwelle zu implementieren, bei der die Signalauswertung begonnen wird, und darunter die Defekterkennung zu deaktivieren. Dadurch werden unnötige Warnmeldungen bzw. Systemreaktionen vermieden. Die nachlassende Sensitivität bei geringen Geschwindigkeiten stellt dennoch keine Beeinträchtigung des Verfahrens dar, da sich insbesondere Niveauregelsysteme in Fahrzeugen bei geringen Geschwindigkeiten eher unkritisch verhalten.

Um die Zuverlässigkeit der Sensordefekterkennung noch weiter zu erhöhen, kann eine sogenannte Wieder-gut-Prüfung vorgesehen sein, bei der nach dem Erkennen eines mechanischen Sensordefektes eine erneute Prüfung erfolgt. Bei einem negativen Prüfergebnis, also falls das Sensorsignal die Radeigenfrequenz wieder enthält, kann beispielsweise ein System-Reset durchgeführt werden.

Weiterhin ist es vorteilhaft, die sich im Laufe des Fahrzeuglebens oder sich mit Betriebszyklen ergebende Radeigenfrequenzänderungen zu berücksichtigen. Dementsprechend kann eine automatische, kontinuierliche Adaption der wenigstens einen Radeigenfrequenz an verschleiß- oder alterungsbedingte Betriebsparameteränderungen und eine service- oder ereignisbedingte Adaption mittels eines Resets oder einer Umschaltung auf einen der Änderung entsprechenden neuen Eigenfrequenzwert erfolgen.

Durch Reifenabrieb und beim Reifenwechsel ändert sich die Masse des Rades. Weiterhin ist im Laufe des Fahrzeuglebens mit einer Veränderung der Federkonstante des Federbeins und besonders der Dämpfungskonstante zu rechnen. Diese Effekte beeinflussen die Radeigenfrequenz und verschieben diese mehr oder minder schnell. Die Wirkung langsamer Änderungen, beispielsweise durch Reifenabrieb, kann durch eine automatische kontinuierliche Anpassung der gesuchten Eigenfrequenz ausgeglichen werden. Für die Auswirkungen schneller Änderungen, beispielsweise einem Wechsel auf Winterreifen, ist eine Umschaltung, etwa manuell über einen Reset-Taster oder ein anderes Reset-Kriterium möglich.

Grundsätzlich ist eine für das erfindungsgemäße Verfahren hinreichend scharfe Ausprägung der betrachteten vertikalen Radeigenfrequenzen in einem vorhersagbaren Bereich zu erwarten. So hat sich herausgestellt, dass diese bei Personenkraftwagen für jedes Fahrzeug bzw. für jede Achse in der Regel in einem Frequenzintervall zwischen 10 Hz und 25 Hz charakteristische Werte annehmen. Es ist daher möglich, das Verfahren einfach in Form einer Analyse werksprogrammiert fester Frequenzen oder Frequenzintervalle zu implementieren und diese zumindest für die erste Inbetriebnahme des Systems zu nutzen.

Eine besonders hohe Sicherheit gegenüber fertigungs- und materialspezifischen Toleranzen kann hingegen erreicht werden, indem zunächst die genaue Lage der Eigenfrequenzen fahrzeugspezifisch, beispielsweise in einem Einlernprozess, gesucht wird, und dann die ermittelten Referenzwerte im elektronischen Speicher abgelegt werden.

Weiterhin kann vorgesehen sein, dass Eigenfrequenzen, die durch an Sensoren oder Sensorteilen angeordnete rückstellende Federmittel erzeugt werden, bei der Sensordefekterkennung berücksichtigt werden. Bei marktüblichen Niveauregelsystemen wird die Radbewegung über ein Koppelgestänge auf das eigentliche Sensorbauteil übertragen. Bei einem solchen Aufbau kann an einem Sensorarm eine Rückstellfeder angeordnet sein, die bei einem Festhalten des Sensorarms in einer definierten Position zu einem Verschwinden der Amplitude der Radeigenfrequenz führt. Daher ist es vorteilhaft, auch diejenigen Eigenfrequenzen zu berücksichtigen, die das schwingungsfähige System aus dieser Rückstellfeder mit einem mechanisch defekten Sensor haben kann. Die Federkonstante der Rückstellfeder sollte dabei zweckmäßigerweise so bemessen sein, dass alle möglichen Eigenfrequenzen möglichst weit von der Radeigenfrequenz entfernt liegen. Es ist auch möglich, dass der Sensorarm durch die Rückstellfeder in unzulässige Stellungen bewegt werden kann, die die Niveauregelung stören. Als ein Nebeneffekt können auch derartige unzulässige Stellungen des Sensorarms mit Hilfe der Frequenzanalyse erkannt werden.

Das erfindungsgemäße Verfahren ist auch in Fahrzeugen mit neuartigen Niveauregelsystemen, beispielsweise auf Ultraschallbasis arbeitende Sensorsysteme sowie sogenannte Tauchankersysteme, die den magnetostriktiven Effekt (feldstärkeabhängige Dimensionsänderung magnetischer Werkstoffe) nutzen oder Systeme mit ins Federbein integriertem linear arbeitenden Höhensensor, vorteilhaft implementierbar.

Überdies können die transformierten Frequenzspektren mit Radeigenfrequenzen grundsätzlich auch zur Erkennung und Plausibilitätsprüfung anderer als mechanischer Sensordefekte, beispielsweise zur Ermittlung von fehlerhaft messenden Sensorelementen bzw. Sensorköpfen von Beschleunigungssensoren, herangezogen werden. Schließlich sei angemerkt, dass das Verfahren zwar vorrangig für Fahrwerke von Kraftfahrzeugen vorgesehen ist, grundsätzlich ist es jedoch auch an Schienenfahrzeugen, beispielsweise im Rahmen einer Radreifenüberwachung oder an Fahrwerken von Flugzeugen während der Start-, Lande- und/oder Rollphasen anwendbar.

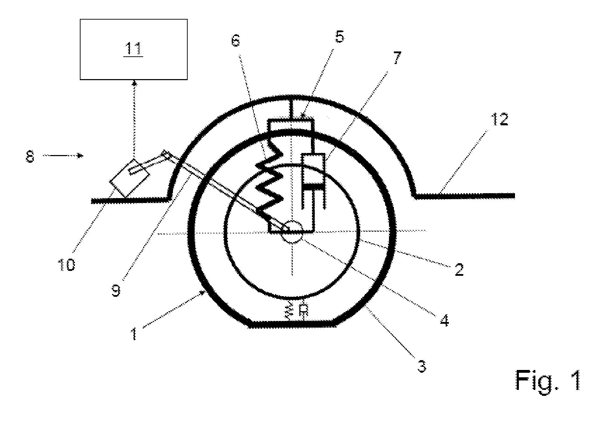

Die Erfindung wird im Folgenden anhand der beiliegenden Zeichnung an einer Ausführungsform näher erläutert. Darin zeigt **Fig. 1** eine schematische Darstellung eines Feder-Masse-Schwingers eines Fahrwerks mit einem Niveauregelsystem zur Veranschaulichung eines erfindungsgemäßen Verfahrens zur Sensordefekterkennung.

Ein in **Fig. 1** gezeigtes schwingungsfähiges System an einem Fahrwerk eines Kraftfahrzeuges umfasst ein Rad 1 mit einer Felge 2, einem Reifen 3 und einem Radträger 4 als ein Massemodell, sowie ein Federbein 5 mit einer Feder 6 und einem Dämpfer 7 als ein Federmodell gemäß der Bewegungsgleichung eines gedämpften Feder-Masse-Schwingers. Das Federbein 5 ist mit einem Fahrzeugaufbau 12 verbunden. Dieses System weist charakteristische Eigenschwingungen auf, die bei einer Schwingungsanregung im üblichen Fahrbetrieb des Fahrzeuges in Erscheinung treten. Zusätzlich ist symbolisch das gedämpfte Schwingungsverhalten des gasgefüllten Reifens 3 durch ein Federelement und ein Dämpfungselement angedeutet.

Weiterhin ist ein Niveauregelsystem 8 vorhanden, dessen Sensorik ein mit dem Radträger 4 verbundenes Koppelgestänge 9 aufweist, das vertikale Radbewegungen gegenüber dem Fahrzeugaufbau 12 an einen am Fahrzeugaufbau 12 angeordneten Höhensensor 10 überträgt. Der Höhensensor 10 misst zur Niveauregelung in hier nicht weiter erläuterter, jedoch bekannter Weise den vertikalen Abstand zwischen dem Rad 1 bzw. Radträger 4 als Bezugspunkt und einem Bezugspunktes des Fahrzeugaufbaus 12.

Der Höhensensor 10 liefert ein Ausgangssignal, das die Amplituden der Eigenfrequenzen des im Fahrbetrieb schwingenden Systems enthält. Dieses Ausgangssignal ist von elektronischen Mitteln 11 zur Weiterverarbeitung abgreifbar. Die elektronischen Mittel 11 umfassen einen Rechner mit geeigneten Signalschnittstellen, einer für eine Fast-Fourier-Transformation ausreichende Rechenleistung und flüchtigen sowie permanenten Datenspeichern. Zudem steht dem Rechner ein Geschwindigkeitssignal der momentanen Fahrgeschwindigkeit zur Verfügung.

Ein Verfahren zum Überwachen eines Fahrwerkregelsystems, insbesondere des Niveauregelsystems 8, zur Erkennung von mechanischen Defekten am Höhensensor 10, seinem zugehörigen Koppelgestänge 9 oder an der Befestigung dieser Teile beruht auf einer Eigenfrequenzanalyse des als Feder-Masse-Schwinger betrachteten Systems. Dazu wird zunächst das am Höhensensor 10 anliegende Sensorausgangssignal innerhalb eines geeigneten Zeitfensters bzw. Zeitraumes in einen Rechner 11 eingelesen und gespeichert. Das gespeicherte Zeitsignal wird im Rechner 11 in einer Fast-Fourier-Transformation in ein Frequenzspektrum transformiert, in dem die Amplituden einzelner Spektrallinien erkennbar werden. Das Frequenzspektrum enthält bei intaktem Kraftfluss zwischen Radträger 4 und Höhensensor 10 die durch die Schwingungsanregung der Fahrbahnunebenheiten angeregte Eigenfrequenz des Rades 1 als eine ausgeprägte Spektrallinie mit einer Frequenz zwischen 10 Hz und 25 Hz. Verschwindet diese vorgegebene Spektralkomponente bei einer permanenten Überwachung aus dem genannten Frequenzsektrum, so wird auf einen mechanischen Defekt geschlossen.

Da ein reales Fahrwerk mit seinen Komponenten ein wesentlich komplexeres Eigenschwingungsverhalten mit mehreren Eigenfrequenzen gegenüber dem modellhaften Feder-Masse-Schwinger zeigen wird, wird zweckmäßigerweise in implementierten Algorithmen, neben der einfachen Prüfung auf das Vorhandensein einer Eigenfrequenz-Amplitude, das transformierte Signal weiteren Prüfungen unterzogen. Insbesondere werden Grenzwertvergleiche mit vorab ermittelten geschwindigkeitsabhängigen Radeigenfrequenz-Referenzwerten im Hinblick auf mit den Eigenfrequenzen korrelierte Amplituden, Frequenzverschiebungen sowie kumulative spektrale Dichten durchgeführt. Gegebenenfalls werden Anpassungen des Signal-Zeitfensters vorgenommen.

Ist ein mechanischer Sensordefekt eindeutig identifiziert, wird eine Warnmeldung ausgegeben und gegebenenfalls eine Maßnahme eingeleitet, die einen fahrstabilen Zustand sicherstellt.

## Bezugszeichenliste

| 1 | Fahrzeugrad |
|---|---|
| 2 | Felge |
| 3 | Reifen |
| 4 | Radträger |
| 5 | Federbein |
| 6 | Feder |
| 7 | Dämpfer |
| 8 | Niveauregelsystem |
| 9 | Koppelgestänge |
| 10 | Höhensensor |
| 11 | Rechnermittel, elektronischen Mittel |
| 12 | Fahrzeugaufbau |

## Patentansprüche

1. Verfahren zum Überwachen von Fahrwerkregelsystemen, beispielsweise von Straßenfahrzeugen, zur Erkennung von Defekten von an Fahrzeugrädern (1) oder Radträgern (4) angeordneten Sensoren (10) oder solchen Sensoren zugehörigen Bauteilen (9) sowie deren Anbringung, **dadurch gekennzeichnet, dass** wenigstens folgende Schritte durchgeführt werden:

   Einlesen und Speichern eines Sensorsignals wenigstens eines relevanten Sensors (10) in einem vorgewählten Zeitfenster,
   Durchführen einer Frequenzbereichstransformation des Sensorsignals,
   Analysieren des Frequenzspektrums im Bereich wenigstens einer vorgegebenen Radeigenfrequenz,
   Erkennen eines Sensordefektes, wenn das Frequenzspektrum in unzulässiger Weise von einer Vorgabe abweicht, und
   Ausgeben einer Meldung bei Erkennen eines Sensordefektes und/oder Einleiten einer Systemreaktion auf einen erkannten Sensordefekt.

2. Verfahren nach Anspruch 1, **dadurch gekennzeichnet, dass** das Frequenzspektrums in einem festgelegten Frequenzintervall auf das Vorhandensein einer oder mehrerer Spektrallinien, die durch Radbewegungen generiert sind, geprüft wird.

3. Verfahren nach Anspruch 1 oder 2, **dadurch gekennzeichnet, dass** in einem festgelegten Frequenzintervall des Frequenzspektrums, in dem wenigstens eine Radeigenfrequenz zu erwarten ist, geprüft wird, ob sich einzelne Spektrallinien um ein festgelegtes Maß aus einem Rauschsignal abheben.

4. Verfahren nach einem der Ansprüche 1 bis 3, **dadurch gekennzeichnet, dass** die Amplitude einer eigenfrequenzrelevanten Spektrallinie des Frequenzspektrums bei einer vorgegebenen festen Frequenz mit einem Grenzwert verglichen wird.

5. Verfahren nach einem der Ansprüche 1 bis 4, **dadurch gekennzeichnet, dass** in einem festgelegten Frequenzintervall des Frequenzspektrums, in dem wenigstens eine Radeigenfrequenz zu erwarten ist, die Spektrallinie mit der größten Amplitude ermittelt und mit einem Grenzwert verglichen wird.

6. Verfahren nach einem der Ansprüche 1 bis 5, **dadurch gekennzeichnet, dass** in einem festgelegten Frequenzintervall des Frequenzspektrums eine spektrale Leistungsdichte ermittelt und mit einem Grenzwert verglichen wird.

7. Verfahren nach einem der Ansprüche 1 bis 6, **dadurch gekennzeichnet, dass** fahrzeuggeschwindigkeitsabhängige Grenzwerte vorgegeben sind.

8. Verfahren nach einem der Ansprüche 1 bis 7, **dadurch gekennzeichnet, dass** bei einer Grenzwertunterschreitung ein mechanischer Sensordefekt detektiert wird.

9. Verfahren nach einem der Ansprüche 1 bis 8, **dadurch gekennzeichnet, dass** eine Adaption der wenigstens einen zu erwartenden Radeigenfrequenz an relevante Betriebsparameteränderungen erfolgt.

10. Verfahren nach Anspruch 9, **dadurch gekennzeichnet, dass** eine automatische kontinuierliche Adaption der wenigstens einen Radeigenfrequenz an verschleiß- oder alterungsbedingte Betriebsparameteränderungen erfolgt.

11. Verfahren nach Anspruch 9 oder 10, **dadurch gekennzeichnet, dass** bei service- oder ereignisbedingten Betriebsparameteränderungen eine Adaption der wenigstens einen Radeigenfrequenz mittels einer Umschaltung auf einen der Änderung entsprechenden neuen Eigenfrequenzwert erfolgt.

12. Verfahren nach einem der Ansprüche 1 bis 11, **dadurch gekennzeichnet, dass** die wenigstens eine Radeigenfrequenz als Anfangswert für die erste Inbetriebnahme vorprogrammiert ist.

13. Verfahren nach einem der Ansprüche 1 bis 11, **dadurch gekennzeichnet, dass** die wenigstens eine Radeigenfrequenz fahrzeugspezifisch vorab eingelernt wird.

14. Verfahren nach einem der Ansprüche 1 bis 13, **dadurch gekennzeichnet, dass** die Sensordefekterkennung bei Fahrzeuggeschwindigkeiten unterhalb einer vorgegebenen Geschwindigkeitsschwelle deaktiviert ist.

15. Verfahren nach einem der Ansprüche 1 bis 14, **dadurch gekennzeichnet, dass** Eigenfrequenzen, die durch an Sensoren (10) oder zugehörigen Sensorteilen (9) angeordnete rückstellende Federmittel erzeugt werden, bei der Sensordefekterkennung berücksichtigt werden.

16. Fahrwerkregelsystemüberwachungsvorrichtung zur Durchführung eines Verfahrens gemäß mindestens einem der Ansprüche 1 bis 15, beispielsweise von Straßenfahrzeugen, zur Erkennung von Defekten von an Fahrzeugrädern (1) oder Radträgern (4) angeordneten Sensoren (10) oder solchen Sensoren zugehörigen Bauteilen (9) sowie deren Anbringung, **dadurch gekennzeichnet, dass** Mittel (11) zum Einlesen und Speichern von Sensorsignalen in vorgewählten Zeitfenstern, zum Durchführen von Frequenzbereichstransformationen von Sensorsignalen, zur Analyse von transformierten Frequenzspektren im Bereich von Radeigenfrequenzen, und zum Melden von Sensordefekten sowie zum Einleiten von Systemreaktionen auf erkannte Sensordefekte vorgesehen sind.

## Claims

1. Method for monitoring undercarriage regulation systems, for example of road vehicles, for detecting defects of sensors (10) arranged on vehicle wheels (1) or wheel carriers (4), or components (9) which are associated with such sensors, and the arrangement thereof, **characterized in that** at least the following steps are carried out:

reading in and storage of a sensor signal of at least one relevant sensor (10) in a preselected time window,
carrying out a frequency range transformation of the sensor signal,
analysing the frequency spectrum in the region of at least one predefined natural frequency of the wheel,

detecting a sensor defect if the frequency spectrum inadmissibly deviates from a prescribed value, and

outputting a message when a sensor defect is detected and/or a system reaction to a detected sensor defect is initiated.

2. Method according to Claim 1, **characterized in that** the frequency spectrum is checked in a defined frequency interval for the presence of one or more spectral lines which are generated by wheel movements.

3. Method according to Claim 1 or 2, **characterized in that** in a defined frequency interval of the frequency spectrum in which at least one natural frequency of the wheel is to be expected it is checked whether individual spectral lines lift off from a noise signal by a defined amount.

4. Method according to one of Claims 1 to 3, **characterized in that** the amplitude of a spectral line, relevant to the natural frequency, of the frequency spectrum at a predefined fixed frequency is compared with a limiting value.

5. Method according to one of Claims 1 to 4, **characterized in that** in a defined frequency interval of the frequency spectrum in which at least one natural frequency of the wheel is to be expected, the spectral line with the greatest amplitude is determined and is compared with a limiting value.

6. Method according to one of Claims 1 to 5, **characterized in that** in a defined frequency interval of the frequency spectrum a spectral power density is determined and compared with a limiting value.

7. Method according to one of Claims 1 to 6, **characterized in that** vehicle-speed-dependent limiting values are predefined.

8. Method according to one of Claims 1 to 7, **characterized in that** when a limiting value is undershot a mechanical sensor defect is detected.

9. Method according to one of Claims 1 to 8, **characterized in that** the at least one natural frequency of the wheel which is to be expected is adapted to relevant operating parameter changes.

10. Method according to Claim 9, **characterized in that** the at least one natural frequency of the wheel is automatically continuously adapted to wear-induced or ageing-induced operator parameter changes.

11. Method according to Claim 9 or 10, **characterized in that** in the case of service-induced or event-induced operating parameter changes the at least one natural frequency of the wheel is adapted by means of switching over to a new natural frequency value which corresponds to the change.

12. Method according to one of Claims 1 to 11, **characterized in that** the at least one natural frequency of the wheel is programmed as an initial value for the first putting into service.

13. Method according to one of Claims 1 to 11, **characterized in that** the at least one natural frequency of the wheel is learned in advance in a vehicle-specific fashion.

14. Method according to one of Claims 1 to 13, **characterized in that** the detection of the sensor defect is deactivated at vehicle speeds below a predefined speed threshold.

15. Method according to one of Claims 1 to 14, **characterized in that** natural frequencies which are generated by resetting spring means which are arranged on sensors (10) or associated sensor parts (9) are taken into account during the detection of the sensor defect.

16. Undercarriage regulation system-monitoring device for carrying out a method according to at least one of Claims 1 to 15, for example for road vehicles, for detecting defects of sensors (10) arranged on vehicle wheels (1) or wheel carriers (4), or components (9) which are associated with such sensors, and the arrangement thereof, **characterized in that** means (11) are provided for reading in and storing sensor signals in preselected time windows, for carrying out frequency range transformations of sensor signals, for analysing transformed frequency spectrums in the region of natural frequencies of wheels, and for signalling sensor defects, as well as for initiating system reactions to detected sensor defects.

## Revendications

1. Procédé de surveillance de systèmes de régulation de mécanismes roulants, par exemple de véhicules routiers, en vue de détecter des défauts sur des capteurs (10) disposés sur des roues de véhicule (1) ou des portes-roue (4), ou sur des composants (9) associés à de tels capteurs, ainsi que leur montage, **caractérisé en ce qu'**au moins les étapes suivantes sont exécutées :

lecture et mise en mémoire d'un signal de capteur d'au moins un capteur (10) pertinent dans une fenêtre de temps présélectionnée, réalisation d'une transformation dans la plage de fréquences du signal de capteur,

analyse du spectre de fréquences dans la plage d'au moins une fréquence propre de roue prédéfinie,

détection d'un défaut de capteur lorsque le spectre de fréquences s'écarte de manière non admissible d'une consigne, et

délivrance d'un message en cas de détection d'un défaut de capteur et/ou induction d'une réaction du système à un défaut de capteur détecté.

2. Procédé selon la revendication 1, **caractérisé en ce que** le spectre de fréquences est soumis à un intervalle de fréquence fixe à un contrôle de la présence d'une ou plusieurs raies spectrales qui sont générées par des mouvements de roue.

3. Procédé selon la revendication 1 ou 2, **caractérisé en ce qu'**un contrôle est effectué dans un intervalle de fréquence fixe du spectre de fréquences, dans lequel au moins une fréquence propre de roue est attendue, afin de vérifier si les raies spectrales individuelles se détachent d'un signal de bruit d'une valeur définie.

4. Procédé selon l'une des revendications 1 à 3, **caractérisé en ce que** l'amplitude d'une raie spectrale du spectre de fréquences, en rapport avec la fréquence propre, est comparée avec une valeur limite à une fréquence fixe prédéfinie.

5. Procédé selon l'une des revendications 1 à 4, **caractérisé en ce que** la raie spectrale ayant l'amplitude la plus grande est déterminée dans un intervalle de fréquence défini du spectre de fréquences, dans lequel est attendue au moins une fréquence propre de roue, puis comparée avec une valeur limite.

6. Procédé selon l'une des revendications 1 à 5, **caractérisé en ce qu'**une densité de puissance spectrale est déterminée dans un intervalle de fréquence défini du spectre de fréquences, puis comparée avec une valeur limite.

7. Procédé selon l'une des revendications 1 à 6, **caractérisé en ce que** des valeurs limites dépendantes de la vitesse du véhicule sont prédéfinies.

8. Procédé selon l'une des revendications 1 à 7, **caractérisé en ce qu'**un défaut de capteur mécanique est détecté en cas de franchissement vers le bas d'une valeur limite.

9. Procédé selon l'une des revendications 1 à 8, **caractérisé en ce qu'**une adaptation est effectuée de l'au moins une fréquence propre de roue à des variations pertinentes de paramètres de fonctionnement.

10. Procédé selon la revendication 9, **caractérisé en ce qu'**une adaptation continue automatique est effectuée de l'au moins une fréquence propre de roue à des variations de paramètres de fonctionnement liées à l'usure ou au vieillissement.

11. Procédé selon la revendication 9 ou 10, **caractérisé en ce qu'**en cas de variations de paramètres de fonctionnement liées à l'entretien ou à un événement, une adaptation de l'au moins une fréquence propre de roue est effectuée par l'intermédiaire d'une permutation sur une nouvelle valeur de la fréquence propre correspondant à la variation.

12. Procédé selon l'une des revendications 1 à 11, **caractérisé en ce que** l'au moins une fréquence propre de roue est préprogrammée en tant que valeur initiale pour la première mise en service.

13. Procédé selon l'une des revendications 1 à 11, **caractérisé en ce que** l'au moins une fréquence propre de roue est préalablement apprise spécifiquement pour le véhicule.

14. Procédé selon l'une des revendications 1 à 13, **caractérisé en ce que** la détection de défaut de capteur est désactivée en présence de vitesses du véhicule inférieures à un seuil de vitesse prédéfini.

15. Procédé selon l'une des revendications 1 à 14, **caractérisé en ce que** les fréquences propres qui sont générées par des moyens à ressort de rappel montés sur les capteurs (10) ou des parties de capteur (9) associées sont prises en compte lors de la détection de défaut de capteur.

16. Dispositif de surveillance de système de régulation de mécanisme roulant destiné à mettre en oeuvre un procédé selon au moins l'une des revendications 1 à 15, par exemple de véhicules routiers, en vue de détecter des défauts sur des capteurs (10) disposés sur des roues de véhicule (1) ou des portes-roue (4), ou sur des composants (9) associés à de tels capteurs, ainsi que leur montage, **caractérisé en ce qu'**il existe des moyens (11) pour lire et mettre en mémoire des signaux de capteur dans des fenêtres de temps présélectionnées, pour réaliser des transformations dans la plage de fréquences de signaux de capteur, pour analyser les spectres de fréquences transformés dans la plage des fréquences propres de roue, et pour signaler des défauts de capteur ainsi que pour induire une réaction du système à des défauts de capteur détectés.

Fig. 1

**IN DER BESCHREIBUNG AUFGEFÜHRTE DOKUMENTE**

**In der Beschreibung aufgeführte Patentdokumente**

- DE 10020521 B4
- DE 19928865 C1
- EP 1281950 A2
- JP 04135913 A
- US 2007068266 A1